# EUROPÄISCHE PATENTSCHRIFT

(11) **EP 2 165 460 B1**
(45) Veröffentlichungstag und Bekanntmachung des Hinweises auf die Patenterteilung: **11.04.2012**
(21) Anmeldenummer: 07726086.7
(22) Anmeldetag: 14.06.2007
(51) Int. Cl.: H04W 84/18, H04W 84/20, H04L 12/24

(54) **VERFAHREN UND SYSTEM ZUM BETREIBEN EINES KOMMUNIKATIONSNETZES**
METHOD AND SYSTEM FOR OPERATING A COMMUNICATION NETWORK
PROCÉDÉ ET SYSTÈME POUR FAIRE FONCTIONNER UN RÉSEAU DE COMMUNICATION

(43) Veröffentlichungstag der Anmeldung: 24.03.2010
(73) Patentinhaber: Siemens Aktiengesellschaft, 80333 München (DE)
(72) Erfinder: ERLMANN, Markus, 90449 Nürnberg (DE); GREBNER, Jens, 90489 Nürnberg (DE)
(86) Internationale Anmeldenummer: PCT/EP2007/005437
(87) Internationale Veröffentlichungsnummer: WO 2008/151653

(56) Entgegenhaltungen:
- EP-A- 1 331 763
- WO-A-99/14898
- US-A1- 2006 128 402

## Beschreibung

Kommunikationssysteme werden in verschiedenen technischen Bereichen eingesetzt. Dabei besteht häufig die Anforderung, dass innerhalb des Kommunikationssystems Daten zwischen Datenquellen und Datensenken zuverlässig mit einer geringen zeitlichen Verzögerung, d.h. mit einer garantierten Latenzzeit, ausgetauscht werden. Ein Beispiel hierfür ist der Austausch von Daten zwischen einer zentralen Steuerungseinheit und Netzknoten bzw. Geräten mit Aktoren und/oder Sensoren eines Kommunikationssystems der Automatisierungstechnik. Eine entsprechende Datenübertragung kann beispielsweise unter Verwendung des Kommunikationsstandards IEEE 802.15.4 erfolgen, bei dem ein zur Datenübertragung verwendeter Übertragungskanal beziehungsweise der in dem Übertragungskanal verwendete Übertragungsrahmen in Zeitschlitze eingeteilt werden kann, unter deren Verwendung eine Kommunikation, d.h. ein unidirektionaler oder ein bidirektionaler Datenaustausch, mit einem vorbestimmten Zeitverhalten möglich ist.

In Kommunikationssystemen allgemein und insbesondere auch in einem Kommunikationssystem der zuvor beschriebenen Art kann es nun durch die vollständige und dauerhafte Nutzung eines für die Datenübertragung zur Verfügung stehenden Übertragungskanals durch den entsprechenden Nutzdatenverkehr, etwa aufgrund entsprechender zyklischer Datenübertragungen der Netzknoten unter Verwendung garantierter Zeitschlitze eines Übertragungsrahmens, dazu kommen, dass für weiteren Datenverkehr, etwa zur Konfiguration eines der Netzknotens des Kommunikationssystems, keine Bandbreite, d.h. keine Übertragungsressourcen, mehr zur Verfügung steht.

Die Druckschrift EP 1 331 763 offenbart ein Verfahren zum Betreiben eines Kommunikationssystems mit einem Kommunikationsnetz erster Art und einem Kommunikationsnetz zweiter Art mit den folgenden Schritten:
- Entfernen des Netzknotens aus dem Kommunikationsnetz erster Art durch den Koordinationsknoten,
- Aufnehmen des Netzknotens in das Kommunikationsnetz zweiter Art durch den Verwaltungs knoten und
- Durchführen eines Datenaustausches zwischen dem Verwaltungsknoten und dem Netzknoten in dem Kommunikationsnetz zweiter Art.

Aus der WO 99/14898 kann man ein Verfahren entnehmen, welches einem Netzknoten ermöglicht von einem ersten Kommunikationsnetz (Piconetz) in ein zweites Kommunikationsnetz, welches die gleichen Übertragungsmedien nutzt, temporär zu wechseln.

Die US 2006/0128402 befasst sich ebenfalls mit Piconetzen wobei die Netze bestehen aus Master- und Slaverechnern. Die Kapazitäten von einzelnen Slaverechner können bei dem beschriebenen Verfahren geshared werden.

Der vorliegenden Erfindung liegt die Aufgabe zugrunde, ein besonders leistungsfähiges und flexibles Verfahren zum Betreiben eines Kommunikationssystems anzugeben.

Diese Aufgabe wird erfindungsgemäß gelöst durch ein Verfahren zum Betreiben eines Kommunikationssystems mit einem Kommunikationsnetz erster Art und einem Kommunikationsnetz zweiter Art mit den folgenden Schritten: Senden einer einen Netzknoten des Kommunikationsnetzes erster Art identifizierenden Aufforderungs-Nachricht an einen Koordinationsknoten des Kommunikationsnetzes erster Art durch einen Verwaltungsknoten des Kommunikationsnetzes zweiter Art, Entfernen des Netzknotens aus dem Kommunikationsnetz erster Art durch den Koordinationsknoten, Aufnehmen des Netzknotens in das Kommunikationsnetz zweiter Art durch den Verwaltungsknoten und Durchführen eines Datenaustausches zwischen dem Verwaltungsknoten und dem Netzknoten in dem Kommunikationsnetz zweiter Art.

Das erfindungsgemäße Verfahren ist vorteilhaft, da es dem Verwaltungsknoten des Kommunikationsnetzes zweiter Art die Möglichkeit bietet, einen Datenaustausch mit einem Netzknoten durchzuführen ohne hierdurch das Kommunikationsnetz erster Art zu belasten, in dem der Netzknoten angeordnet ist. Hierzu sendet der Verwaltungsknoten des Kommunikationsnetzes zweiter Art erfindungsgemäß eine Aufforderungs-Nachricht an den Koordinationsknoten des Kommunikationsnetzes erster Art. In dieser Aufforderungs-Nachricht wird derjenige Netzknoten des Kommunikationsnetzes erster Art identifiziert, zu dem der Verwaltungsknoten des Kommunikationsnetzes zweiter Art eine Verbindung aufbauen möchte. Das Senden der Aufforderungs-Nachricht von dem Verwaltungsknoten an den Koordinationsknoten kann dabei über eine beliebige Art drahtloser oder drahtgebundener Kommunikationsschnittstelle erfolgen. Dies beinhaltet insbesondere, dass es sich hierbei nicht notwendigerweise um eine in dem Kommunikationsnetz erster Art oder in dem Kommunikationsnetz zweiter Art zur Kommunikation mit dem jeweiligen Netzknoten verwendete Kommunikationsschnittstelle handelt.

Aufgrund der empfangenen Aufforderungs-Nachricht entfernt der Koordinationsknoten nun den Netzknoten aus dem Kommunikationsnetz erster Art. Hierdurch wird es ermöglicht, dass im nächsten Verfahrensschritt der Netzknoten durch den Verwaltungsknoten in das Kommunikationsnetz zweiter Art aufgenommen wird. Anschließend erfolgt ein Datenaustausch zwischen dem Verwaltungsknoten und dem Netzknoten in dem Kommunikationsnetz zweiter Art. Somit besteht vorteilhafterweise die Möglichkeit, Datenübertragungen zwischen dem Verwaltungsknoten und dem Netzknoten vollständig von Datenübertragungen von oder zu den Netzknoten in dem Kommunikationsnetz erster Art zu entkoppeln. Eine Beeinträchtigung der Dienstgüte beziehungsweise Übertragungsqualität in dem Kommunikationsnetz erster Art wird somit vorteilhafterweise vermieden.

Es sei darauf hingewiesen, dass in dem Kommunikationsnetz erster Art in der Regel eine Mehrzahl von Netzknoten betrieben werden wird. Dabei kann eine Kommunikation in dem Kommunikationsnetz erster Art sowohl ausschließlich zwischen dem Koordinationsknoten und dem jeweiligen Netzknoten als auch gegebenenfalls zusätzlich zwischen den Netzknoten des Kommunikationsnetzes erster Art untereinander erfolgen. Dem gegenüber findet in dem Kommunikationsnetz zweiter Art vorzugsweise ausschließlich ein Datenaustausch zwischen dem Verwaltungsknoten und dem betreffenden Netzknoten, der zuvor in das Kommunikationsnetz zweiter Art aufgenommen worden ist, statt. Dabei ist es möglich, dass das Kommunikationsnetz zweiter Art ausschließlich aus dem Verwaltungsknoten und dem betreffenden Netzknoten besteht, d.h. dass der Verwaltungsknoten in dem Kommunikationsnetz zweiter Art zu jedem Zeitpunkt lediglich eine Verbindung mit demjenigen Netzknoten aufbaut, mit dem ein Datenaustausch durchgeführt werden soll.

Vorzugsweise kann das erfindungsgemäße Verfahren derart ausgestaltet sein, dass als Kommunikationsnetz erster Art ein Nutzdatennetz und als Kommunikationsnetz zweiter Art ein Konfigurationsnetz verwendet wird und im Rahmen des Datenaustausches eine Konfiguration oder eine Änderung einer bestehenden Konfiguration des Netzknotens erfolgt. Diese Ausführungsform des erfindungsgemäßen Verfahrens ist bevorzugt, da hierdurch eine Trennung der Übertragung von Nutz- beziehungsweise Produktivdaten und der Übertragung von Konfigurations- beziehungsweise Projektierungsdaten erfolgen kann. Bei einer entsprechenden Änderung einer bestehenden Konfiguration kann es sich beispielsweise um das Ändern eines Parameters des Netzknotens handeln. Eine funktionale Beeinflussung des Nutzdatennetzes wird erfindungsgemäß vorteilhafterweise dadurch verhindert, dass die entsprechende Konfiguration beziehungsweise Konfigurationsänderung nicht in dem Kommunikationsnetz erster Art sondern in dem Kommunikationsnetz zweiter Art durchgeführt wird.

Vorteilhafterweise kann das erfindungsgemäße Verfahren auch derart ablaufen, dass nach dem Entfernen des Netzknotens aus dem Kommunikationsnetz erster Art ein Aufnehmen des Netzknotens ausschließlich in das Kommunikationsnetz zweiter Art zugelassen wird. Vorzugsweise versucht der Netzknoten nach seiner Entfernung aus dem Kommunikationsnetz erster Art automatisch, sich unmittelbar wieder an einem Kommunikationsnetz des Kommunikationssystems anzumelden. In diesem Fall lässt das Kommunikationsnetz erster Art vorteilhafterweise eine entsprechende Wiederanmeldung mit nachfolgender Wiederaufnahme des Netzknotens in das Kommunikationsnetz erster Art nicht zu. Dies kann beispielsweise dadurch geschehen, dass das Kommunikationsnetz erster Art beziehungsweise der Koordinationsknoten des Kommunikationsnetzes erster Art Anfragen des Netzknotens zur Wideraufnahme in ein Kommunikationsnetz ignoriert. Hingegen reagiert das Kommunikationsnetz zweiter Art beziehungsweise der Verwaltungsknoten des Kommunikationsnetzes zweiter Art auf entsprechende Anfragen und nimmt den Netzknoten in das Kommunikationsnetz zweiter Art auf. Hierbei besteht der Vorteil, dass ein entsprechendes Entfernen des Netzknotens aus dem Kommunikationsnetz erster Art sowie eine darauf folgende Aufnahme des Netzknotens in das Kommunikationsnetz zweiter Art in automatisierter Weise ablaufen können.

In einer besonders bevorzugten Weiterbildung des erfindungsgemäßen Verfahrens wird der Netzknoten nach erfolgtem Datenaustausch von dem Verwaltungsknoten aus dem Kommunikationsnetz zweiter Art entfernt. Dies ist vorteilhaft, da der Netzknoten somit vorteilhafterweise für eine Aufnahme in ein anderes Kommunikationsnetz des Kommunikationssystems wieder zur Verfügung gestellt wird.

In einer weiteren bevorzugten Ausführungsform kann das erfindungsgemäße Verfahren auch derart ablaufen, dass der Netzknoten nach erfolgtem Datenaustausch in dem Kommunikationsnetz zweiter Art verbleibt. Dies bietet den Vorteil, dass eine dauerhafte Zuweisung des Netzknotens zu einem anderen Kommunikationsnetz des Kommunikationssystems ermöglicht wird, wobei vor Beginn des Betriebs des Netzknotens in dem Kommunikationsnetz zweiter Art beispielsweise eine Änderung eines Parametersatzes des Netzknotens möglich ist.

Vorzugsweise kann das erfindungsgemäße Verfahren auch so ablaufen, dass der Verwaltungsknoten dem Koordinationsknoten nach erfolgtem Datenaustausch mit dem Netzknoten durch das Senden einer Freigabe-Nachricht eine Wiederaufnahme des Netzknotens in das Kommunikationsnetz erster Art gestattet. Das Senden der Freigabe-Nachricht von dem Verwaltungsknoten an den Koordinationsknoten kann wiederum drahtlos oder drahtgebunden erfolgen und stellt die Voraussetzung dafür dar, dass der Netzknoten nach erfolgtem Datenaustausch wieder in das Kommunikationsnetz erster Art aufgenommen werden kann.

In einer besonders bevorzugten Weiterbildung des erfindungsgemäßen Verfahrens wird der Netzknoten von dem Koordinationsknoten nach erfolgtem Datenaustausch wieder in das Kommunikationsnetz erster Art aufgenommen. Dies bietet den Vorteil, dass der Netzknoten nach erfolgtem Datenaustausch mit dem Verwaltungsknoten, d.h. beispielsweise nach erfolgter Rekonfiguration des Netzknotens, seinen Betrieb in dem Kommunikationsnetz erster Art wieder aufnehmen kann.

Vorteilhafterweise kann das erfindungsgemäße Verfahren auch in der Art ausgestaltet sein, dass dem Netzknoten von dem Koordinationsknoten eine Identität des Kommunikationsnetzes zweiter Art mitgeteilt wird, bei dem er sich nach seiner Entfernung aus dem Kommunikationsnetz erster Art anmelden soll. Dies bietet den Vorteil, dass dem Netzknoten bereits vor seinem Entfernen aus dem Kommunikationsnetz erster Art die Identität des Kommunikationsnetzes zweiter Art bekannt ist, bei dem er sich nachfolgend anmelden soll. Hierdurch kann einerseits der entsprechende Anmeldevorgang beschleunigt werden; darüber hinaus ist hierbei vorteilhafterweise eine dynamische Festlegung beziehungsweise Vergabe der Identität des Kommunikationsnetzes zweiter Art möglich, d.h. eine statische, dauerhafte Reservierung einer Identität für das Kommunikationsnetz zweiter Art ist vorteilhafterweise nicht erforderlich. In einer weiteren bevorzugten Ausführungsform des erfindungsgemäßen Verfahrens übermittelt der Verwaltungsknoten die dem Netzknoten mitzuteilende Identität des Kommunikationsnetzes zweiter Art an den Koordinationsknoten. Hierdurch wird der Koordinationsknoten des Kommunikationsnetzes erster Art vorteilhafterweise über die dem Netzknoten mitzuteilende Identität des Kommunikationsnetzes zweiter Art in Kenntnis gesetzt, so dass auch seitens des Koordinationsknotens eine statische Speicherung der betreffenden Information vorteilhafterweise nicht erforderlich ist.

In einer weiteren besonders bevorzugten Ausführungsform ist das erfindungsgemäße Verfahren derart ausgeprägt, dass der Verwaltungsknoten an den Netzknoten eine Identität desjenigen Kommunikationsnetzes übermittelt, bei dem sich der Netzknoten nach erfolgtem Datenaustausch anmelden soll. Dies bietet den Vorteil, dass der Netzknoten nach erfolgtem Datenaustausch eine gezielte Anmeldung bei dem Kommunikationsnetz, dessen Identität ihm von dem Verwaltungsknoten übermittelt worden ist, vornehmen kann. Bei dem betreffenden Kommunikationsnetz kann es sich sowohl um das Kommunikationsnetz erster Art als auch um ein beliebiges weiteres Kommunikationsnetz des Kommunikationssystems handeln.

Grundsätzlich können im Rahmen des erfindungsgemäßen Verfahrens beliebige Arten von Netzknoten verwendet werden. Besonders vorteilhaft ist jedoch die Ausführungsform des erfindungsgemäßen Verfahrens, dass drahtlos an das jeweilige Kommunikationsnetz angeschlossene Netzknoten verwendet werden. Dies bedeutet, dass die Kommunikation mit den Netzknoten sowohl in dem Kommunikationsnetz erster Art als auch in dem Netzknoten zweiter Art über eine entsprechende Funkschnittstelle erfolgt. Dies bietet den Vorteil, dass ein automatisierter und damit auch besonders effizienter Ablauf des erfindungsgemäßen Verfahrens ermöglicht wird. Gleichzeitig bieten drahtlos angeschlossene Netzknoten den Vorteil, dass sie aufgrund dessen, dass ein drahtgebundener Anschluss an ein Kommunikationsnetz nicht erforderlich ist, vielseitig und flexibel einsetzbar sind.

Vorzugsweise kann das erfindungsgemäße Verfahren auch in der Form weitergebildet sein, dass als Kommunikationsnetz erster Art und/oder als Kommunikationsnetz zweiter Art ein Kommunikationsnetz gemäß dem Standard IEEE 802.15.4 verwendet wird. Die Verwendung des Standards IEEE 802.15.4 ist vorteilhaft, da es sich hierbei um einen robusten und weit verbreiteten Standard zur drahtlosen Kommunikation handelt. Dabei ist vorteilhafterweise insbesondere der Stromverbrauch von gemäß diesem Standard als Gerät ("device") betriebenen Netzknoten beziehungsweise Endgeräten vergleichsweise niedrig, so dass auch batteriebetriebene Netzknoten eine Einsatzdauer von mehreren Monaten oder Jahren ohne Batteriewechsel erzielen können.

In einer weiteren besonders bevorzugten Ausführungsform des erfindungsgemäßen Verfahrens erfolgt die Datenübertragung zwischen dem Netzknoten und dem Koordinationsknoten sowie dem Netzknoten und_dem_Verwaltungsknoten unter Verwendung unterschiedlicher Kommunikationsprotokolle. Dies bedeutet, dass der Netzknoten vorteilhafterweise über zumindest zwei Kommunikationsprotokolle kommunizieren kann, d.h. über zumindest zwei unterschiedliche "Kommunikationsstacks" bzw. "Protokollstacks" verfügt. Dabei kann eines der Kommunikationsprotokolle für die Kommunikation in dem Kommunikationsnetz erster Art verwendet werden, wobei ein weiteres Kommunikationsprotokoll so lange inaktiv ist, bis der Netzknoten aus dem Kommunikationsnetz erster Art entfernt wird. Zu diesem Zeitpunkt kann nun eine Umschaltung der innerhalb des Netzknotens verwendeten Kommunikationsstacks stattfinden, d.h. das Kommunikationsprotokoll für den Betrieb des Netzknotens im Kommunikationsnetz erster Art wird deaktiviert und das weitere Kommunikationsprotokoll wird für die Dauer des Betriebs des Netzknotens in dem Kommunikationsnetz zweiter Art aktiviert. Dies bietet den Vorteil, dass eine Beschränkung dahingehend, dass in dem Kommunikationsnetz erster Art und in dem Kommunikationsnetz zweiter Art dasselbe Kommunikationsprotokoll verwendet wird, vorteilhafterweise nicht erforderlich ist. Hierdurch wird die Flexibilität hinsichtlich der Einsatzmöglichkeiten des erfindungsgemäßen Verfahrens weiter erhöht.

Vorteilhafterweise ist das erfindungsgemäße Verfahren derart ausgestaltet, dass das Kommunikationsnetz erster Art und das Kommunikationsnetz zweiter Art unterschiedliche Übertragungskanäle nutzen. Hierdurch wird vorteilhafterweise sichergestellt, dass die Kommunikation beziehungsweise Datenübertragung in dem Kommunikationsnetz erster Art und in dem Kommunikationsnetz zweiter Art vollkommen unabhängig voneinander sind, d.h. dass insbesondere eine Beeinträchtigung der Verfügbarkeit und der bereitgestellten Dienstgüte der Übertragungsressourcen des Kommunikationsnetzes erster Art durch den Datenaustausch in dem Kommunikationsnetz zweiter Art ausgeschlossen ist.

In einer weiteren bevorzugten Ausführungsform des erfindungsgemäßen Verfahrens wird ein Kommunikationssystem der Automatisierungstechnik mit Netzknoten mit Sensoren und/oder Aktoren verwendet. Dies ist vorteilhaft, da insbesondere im Bereich der Automatisierungstechnik hohe Anforderungen hinsichtlich der Verfügbarkeit der verwendeten Kommunikationsnetze sowie hinsichtlich einer Übertragung von Daten mit minimaler, unter allen Umständen eingehaltener Verzögerung, gestellt werden. Darüber hinaus ist bei Netzknoten mit Sensoren und/oder Aktoren in der Praxis auch vergleichsweise häufig eine Änderung, etwa in Form einer Änderung eines Parameters des betreffenden Sensors beziehungsweise Aktors, erforderlich, so dass auch aus diesem Grund eine Verwendung des erfindungsgemäßen Verfahrens im Bereich der Automatisierungstechnik besonders vorteilhaft ist.

Die Erfindung betrifft des Weiteren einen Koordinationsknoten.

Hinsichtlich des Koordinationsknotens liegt der vorliegenden Erfindung die Aufgabe zugrunde, einen Koordinationsknoten anzugeben, der ein besonders leistungsfähiges und flexibles Verfahren zum Betreiben eines Kommunikationssystems ermöglicht.

Diese Aufgabe wird erfindungsgemäß gelöst durch einen Koordinationsknoten mit Mitteln zur Verwendung in dem erfindungsgemäßen Verfahren beziehungsweise mit Mitteln zur Verwendung in einer der zuvor beschriebenen bevorzugten Weiterbildungen des erfindungsgemäßen Verfahrens.

Hinsichtlich der Vorteile des erfindungsgemäßen Koordinationsknotens sowie seiner bevorzugten Weiterbildungen sei wiederum auf die entsprechenden Ausführungen im Zusammenhang mit dem erfindungsgemäßen Verfahren sowie seinen bevorzugten Weiterbildungen verwiesen.

Die vorliegende Erfindung betrifft darüber hinaus einen Verwaltungsknoten.

Hinsichtlich des Verwaltungsknotens liegt der vorliegenden Erfindung die Aufgabe zugrunde, einen Verwaltungsknoten anzugeben, der ein besonders leistungsfähiges und flexibles Verfahren zum Betreiben eines Kommunikationssystems unterstützt.

Diese Aufgabe wird erfindungsgemäß gelöst durch einen Verwaltungsknoten mit Mitteln zur Verwendung in dem erfindungsgemäßen Verfahren beziehungsweise mit Mitteln zur Verwendung in einer der zuvor beschriebenen bevorzugten Weiterbildungen des erfindungsgemäßen Verfahrens.

Die Vorteile des erfindungsgemäßen Verwaltungsknotens sowie seiner bevorzugten Weiterbildungen ergeben sich wiederum aus den vorherigen Ausführungen im Zusammenhang mit dem erfindungsgemäßen Verfahren sowie seinen bevorzugten Weiterbildungen.

In einer besonders bevorzugten Ausführungsform ist der erfindungsgemäße Verwaltungsknoten zusätzlich als Koordinationsknoten ausgebildet. Dies bietet den Vorteil, dass der Verwaltungsknoten nicht nur zur Aufnahme eines Netzknotens und zum Durchführen eines Datenaustausches mit diesem Netzknoten ausgebildet ist, sondern darüber hinaus diesen Netzknoten auch nach Empfang einer entsprechenden Aufforderungs-Nachricht von einem weiteren Verwaltungsknoten aus dem von ihm verwalteten Kommunikationsnetz zweiter Art entfernen kann. Somit handelt es sich bei einem entsprechend weitergebildeten Verwaltungsknoten vorteilhafterweise um eine besonders flexible und vielseitig einsetzbare Ausführungsform des erfindungsgemäßen Verwaltungsknotens.

Die Erfindung betrifft weiterhin ein Kommunikationssystem.

Hinsichtlich des Kommunikationssystems liegt der vorliegenden Erfindung die Aufgabe zugrunde, ein besonders leistungsfähiges und flexibles Kommunikationssystem anzugeben.

Diese Aufgabe wird erfindungsgemäß gelöst durch ein Kommunikationssystem mit einem erfindungsgemäßen Koordinationsknoten sowie einem erfindungsgemäßen Verwaltungsknoten beziehungsweise einem Verwaltungsknoten gemäß der zuvor beschriebenen besonders bevorzugten Weiterbildung des erfindungsgemäßen Verwaltungsknotens.

Hinsichtlich der Vorteile des erfindungsgemäßen Kommunikationssystems sei wiederum auf die vorstehenden Ausführungen im Zusammenhang mit dem erfindungsgemäßen Verfahren sowie seinen bevorzugten Weiterbildungen verwiesen.

Im Folgenden wird die Erfindung anhand eines Ausführungsbeispiels näher erläutert. Hierzu zeigt die
- Figur: in einer schematischen Skizze in drei Teilen a), b) und c) den zeitlichen Ablauf eines Ausführungsbeispiels des erfindungsgemäßen Verfahrens.

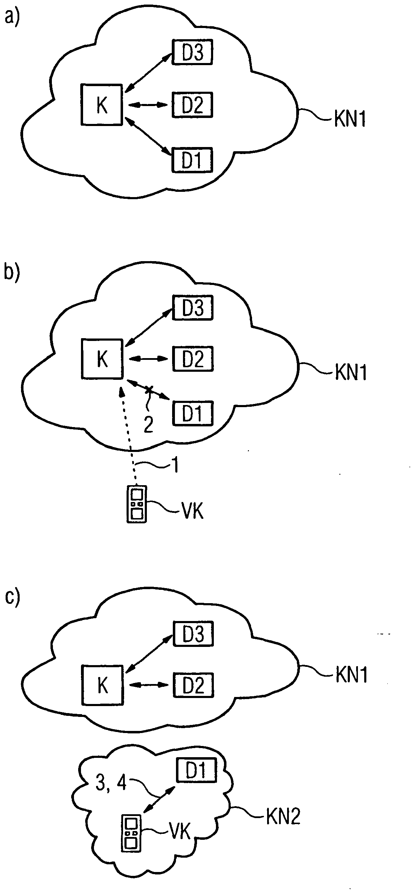

In der Figur ist der Ablauf eines Ausführungsbeispiels des erfindungsgemäßen Verfahrens derart gezeigt, dass in den Teilen a), b) und c) jeweils die Situation zu einem unterschiedlichen Zeitpunkt dargestellt ist.

Im Folgenden sei angenommen, dass es sich bei einem erstmalig in a) dargestellten Kommunikationsnetz erster Art KN1 um ein im Bereich der Automatisierungstechnik eingesetztes Kommunikationsnetz handelt. Dieses weist einen Koordinationsknoten K, etwa in Form einer Steuerungseinheit, sowie Netzknoten D1, D2, D3, etwa in Form von Sensoren und/oder Aktoren beziehungsweise in Form von Geräten mit Sensoren und/oder Aktoren, auf. Bei dem Kommunikationsnetz erster Art KN1 handelt es sich um ein Kommunikationsnetz gemäß dem Standard IEEE 802.15.4, wobei die Netzknoten D1, D2, D3 mit dem Koordinationsknoten K unter Verwendung so genannter garantierter Zeitschlitze (Guaranteed Time Slot, GTS) kommunizieren. Entsprechende garantierte Zeitschlitze sind den jeweiligen Netzknoten D1, D2, D3 zur_alleinigen Verwendung zugeteilt, so dass eine deterministische Kommunikation mit vorgegebener Latenzzeit zwischen den Netzknoten D1, D2, D3 und dem Koordinationsknoten K sichergestellt ist. Entsprechend dem Standard IEEE 802.15.4 erfolgt die Kommunikation dabei drahtlos, d.h. der Koordinationsknoten sowie die Netzknoten D1, D2, D3 verfügen jeweils über eine entsprechende drahtlose Funkschnittstelle.

In der in Teil a) der Figur dargestellten Ausgangssituation werden Nutzdaten zwischen den drahtlosen Teilnehmern in Form der Netzknoten D1, D2, D3 und dem Koordinationsknoten K, der hinsichtlich seiner Funktion in dem Standard IEEE 802.15.4 auch als "Coordinator" bezeichnet wird, ausgetauscht. Der Datenaustausch geschieht in dem Kommunikationsnetz erster Art, das die Funktion eines Nutzdatennetzes erfüllt. Dies bedeutet, dass das Kommunikationsnetz erster Art im Wesentlichen der Übertragung von Nutzdaten vorbehalten ist, so dass andere Arten von Daten nicht oder zumindest nur eingeschränkt übertragen werden können oder sollen.

Um nun eine Änderung der Konfiguration beispielsweise des Netzknotens D1 des Kommunikationsnetzes erster Art KN1 vornehmen zu können ohne dabei die Leistungsfähigkeit des Kommunikationsnetzes erster Art KN1 zu beeinträchtigen, sendet gemäß Teil b) der Figur ein Verwaltungsknoten VK eines Kommunikationsnetzes zweiter Art in einem ersten Verfahrensschritt 1 eine Aufforderungs-Nachricht an den Koordinationsknoten K des Kommunikationsnetzes erster Art KN1. Mit dieser Aufforderungs-Nachricht wird der Koordinationsknoten K angewiesen, den in der Aufforderungs-Nachricht identifizierten Netzknoten D1 aus dem Kommunikationsnetz erster Art KN1 in Form des Nutzdaten- beziehungsweise Produktivnetzes zu entfernen. Die Übertragung der Aufforderungs-Nachricht von dem Verwaltungsknoten VK, der die Funktion eines so genannten "Human Machine Interface (HMI)" erfüllen kann, d.h. etwa ein Bedienterminal zur Durchführung einer Konfiguration eines der Netzknoten D1, D2, D3 des Kommunikationssystems aufweist, an den Koordinationsknoten K kann drahtlos über eine Funkschnittstelle oder auch drahtgebunden, d.h. beispielsweise über eine Schnittstelle gemäß dem PROFINET-Standard, erfolgen.

Im zweiten Verfahrensschritt 2 entfernt der Koordinationsknoten K den Netzknoten D1 gemäß der Darstellung in Teil b) der Figur aufgrund der zuvor in Verfahrensschritt 1 empfangenen Aufforderungs-Nachricht aus dem Kommunikationsnetz erster Art KN1.

In dem Ausführungsbeispiel der Figur nimmt der Verwaltungsknoten VK gemäß Teil c) der Figur nun den zuvor aus dem ersten Kommunikationsnetz KN1 entfernten Netzknoten D1 im dritten Verfahrensschritt 3 in ein zweites Kommunikationsnetz KN2 auf. Entsprechend der Darstellung der Figur kann dies dadurch erfolgen, dass der Verwaltungsknoten VK ein Kommunikationsnetz zweiter Art KN2 in Form eines Projektierungsnetzes mit einer festen Identität erzeugt. Dies bedeutet, dass der Verwaltungsknoten VK hier gleichzeitig die Funktion eines Koordinationsknotens wahrnimmt. Selbstverständlich ist es jedoch auch möglich, dass das Kommunikationsnetz zweiter Art KN2 statischer Natur ist, d.h. dass dem Kommunikationsnetz zweiter Art KN2 unabhängig davon, ob es zum jeweiligen Zeitpunkt einen Netzknoten aufweist oder nicht eine feste Identität zugeordnet ist und das Kommunikationsnetz zweiter Art KN2 somit jederzeit zur Aufnahme von Netzknoten bereit ist.

Im Detail kann das Aufnehmen des aus dem Kommunikationsnetz erster Art KN1 entfernten Netzknotens D1 in das Kommunikationsnetz zweiter Art KN2 beispielsweise derart ablaufen, dass der Netzknoten D1 neu startet und versucht, sich bei einem verfügbaren Kommunikationsnetz anzumelden. Das Kommunikationsnetz erster Art KN1 lässt jedoch keine Wiederanmeldung zu, d.h. es antwortet nicht auf eine entsprechende Anfrage des Netzknotens D1 zur Wiederaufnahme in das Kommunikationsnetz erster Art KN1. Das Kommunikationsnetz zweiter Art KN2 reagiert jedoch auf die entsprechende Anfrage und ermöglicht es dem Netzknoten D1, sich entsprechend Verfahrensschritt 3 in Teil c) der Figur in dem Kommunikationsnetz zweiter Art KN2 bei dem Verwaltungsknoten VK anzumelden.

Vorteilhafterweise kann dem Netzknoten D1 bereits von dem Koordinationsknoten K in dem Kommunikationsnetz erster Art KN1 die Identität des Kommunikationsnetzes zweiter Art KN2 mitgeteilt werden, bei dem er sich nach seiner Entfernung aus dem Kommunikationsnetz erster Art KN1 anmelden soll. Die betreffende Identität des Kommunikationsnetzes zweiter Art KN2 wird dem Koordinationsknoten K des Kommunikationsnetzes erster Art KN1 vorteilhafterweise zuvor von dem Verwaltungsknoten VK des Kommunikationsnetzes zweiter Art KN2 mitgeteilt. Diese Vorgehensweise hat den Vorteil, dass das Reservieren einer festen Identität für das Konfigurationsnetz, d.h. das Kommunikationsnetz zweiter Art KN2, nicht in statischer Form erforderlich ist.

Im Folgenden kann nun ein Datenaustausch zwischen dem Verwaltungsknoten VK und dem Netzknoten D1 in dem Kommunikationsnetz zweiter Art KN2 durchgeführt werden. Im Rahmen eines solchen, in der Figur in Teil c) durch Verfahrensschritt 4 angedeuteten Datenaustausches kann beispielsweise eine Änderung der Konfiguration des Netzknotens D1 durch den Verwaltungsknoten VK vorgenommen werden. Dabei ist die Art der jeweils ausgetauschten Daten von dem jeweiligen Anwendungsfall abhängig. So kann eine entsprechende Änderung der Konfiguration des Netzknoten D1, im Falle eines Netzknotens mit einem Temperatursensor beispielsweise darin bestehen, dass eine Temperaturschwelle des Netzknotens D1 geändert wird. Alternativ zu einer entsprechenden Änderung einer Konfiguration ist es beispielsweise auch denkbar, dass etwa im Rahmen einer Fehleranalyse Daten, etwa in Form einer Logdatei ("log file"), von dem Netzknoten D1 an den Verwaltungsknoten VK übertragen werden oder generell eine Aktualisierung einer Software des Netzknotens D1 erfolgt.

Nach Abschluss der Konfiguration teilt der Verwaltungsknoten VK dem Koordinationsknoten K des Kommunikationsnetzes erster Art KN1 in einem im zeitlichen Ablauf der Figur nicht mehr dargestellten Verfahrensschritt vorteilhafterweise mit, dass der Netzknoten D1 dem Kommunikationsnetz erster Art KN1 in Form des Nutzdatennetzes wieder beitreten darf. Die entsprechende Kommunikation zwischen dem Verwaltungsknoten VK und dem Koordinationsknoten K kann wiederum drahtlos oder drahtgebunden erfolgen.

Im nächsten Schritt entfernt der Verwaltungsknoten VK den Netzknoten D1, für den zuvor eine Änderung der Konfiguration beziehungsweise Projektierung stattgefunden hat, aus dem Kommunikationsnetz zweiter Art KN2. Alternativ hierzu kann sich der Netzknoten D1 selbstverständlich auch eigenständig aus dem Kommunikationsnetz zweiter Art KN2 abmelden. Daraufhin versucht der Netzknoten D1 erneut, sich an einen der verfügbaren Kommunikationsnetze KN1, KN2 anzumelden. Der Koordinationsknoten K des Kommunikationsnetzes erster Art KN1 beantwortet die entsprechende Anfrage des Netzknotens D1 und nimmt diesen wieder in das Kommunikationsnetz erster Art KN1 in Form des Nutzdatennetzes auf. Somit steht der Netzknoten D1 im Folgenden nun wieder in dem Kommunikationsnetz erster Art KN1 zur Verfügung.

Vorzugsweise kann der Verwaltungsknoten VK bereits nach Abschluss der Konfiguration dem Netzknoten D1 eine Identität desjenigen Kommunikationsnetzes übermitteln, bei dem sich der Netzknoten D1 nach erfolgtem Datenaustausch, d.h. nach Beendigung der Änderung der Konfiguration, anmelden soll. Somit kann dem Netzknoten D1 nach Abschluss des Datenaustausches in dem Kommunikationsnetz zweiter Art KN2 vorteilhafterweise ein, gegebenenfalls auch von dem Koordinationsknoten K des Kommunikationsnetzes erster Art KN1 unterschiedlicher, Koordinationsknoten fest zugewiesen werden, d.h. der Netzknoten D1 kann nach Änderung seiner Konfiguration auch in ein anderes Kommunikationsnetz als das Kommunikationsnetz erster Art KN1 aufgenommen werden.

Der Netzknoten D1 verfügt vorteilhafterweise über zwei oder mehr unterschiedliche Kommunikationsstacks, d.h. unterstützt eine Kommunikation über entsprechende unterschiedliche Kommunikationsprotokolle. Dabei wird einer dieser Kommunikationsstacks vorteilhafterweise für die Kommunikation im Kommunikationsnetz erster Art KN1 und ein anderer für die Kommunikation, d.h. die Datenübertragung, im Kommunikationsnetz zweiter Art KN2 verwendet. Dies bietet den Vorteil, dass auch technisch grundsätzlich unterschiedliche Kommunikationsprotokolle und damit Übertragungsverfahren in dem Kommunikationsnetz erster Art KN1 und in dem Kommunikationsnetz zweiter Art verwendet werden können. So ist es beispielsweise denkbar, dass das Kommunikationsnetz erster Art KN1 unter Verwendung eines nicht standardisierten Kommunikationsprotokolls betrieben wird während der Betrieb in dem Kommunikationsnetz zweiter Art KN2 mit einem standardisierten Kommunikationsprotokoll, wie beispielsweise ZigBee aufbauend auf dem Standard IEEE 802.15.4, ablaufen kann.

Vorteilhafterweise besteht darüber hinaus die Möglichkeit, dass der Verwaltungsknoten VK gleichzeitig selbst als Koordinationsknoten ausgebildet ist. In diesem Fall verbleibt der Netzknoten D1 vorteilhafterweise nach Beendigung seiner Konfiguration beziehungsweise Rekonfiguration in dem Kommunikationsnetz zweiter Art KN2. Somit kann das erfindungsgemäße Verfahren vorteilhafterweise auch dafür verwendet werden, einen Netzknoten D1, etwa in Form eines Gerätes der Automatisierungstechnik, einem anderen Koordinationsknoten, d.h. einem anderen Kommunikationsnetz, zuzuweisen. Im Rahmen des Datenaustausches besteht dabei die Möglichkeit, dem Netzknoten D1 vor Beginn des Betriebs in dem Kommunikationsnetz zweiter Art KN2 etwa einen neuen Parametersatz zur Verfügung zu stellen. Dies bietet den Vorteil, dass kein manueller Parametrisierungsaufwand entsteht, wenn ein Gerät in Form des Netzknotens D1 das Kommunikationsnetz wechseln soll beziehungsweise einem anderen Koordinationsknoten zugeordnet wird.

Aus den vorstehenden Ausführungen ist als grundlegender Vorteil des beschriebenen Ausführungsbeispiels des erfindungsgemäßen Verfahrens erkennbar, dass in einem Kommunikationssystem Produktivbetrieb und Konfigurationsbetrieb, d.h. die Übertragung von Nutzdaten und Konfigurationsdaten, in unterschiedlichen Kommunikationsnetzen und damit beispielsweise insbesondere auch auf unterschiedlichen Kanälen eines Frequenzbandes ablaufen können. Somit wird insbesondere die Datenübertragung in dem Kommunikationsnetz erster Art KN1, d.h. der Produktivbetrieb, nicht durch den in dem Kommunikationsnetz zweiter Art KN2 erfolgenden Datenaustausch, d.h. durch den Konfigurationsbetrieb, gestört beziehungsweise beeinträchtigt. Weiterhin besteht durch die Kanaltrennung von Produktiv- und Konfigurationsbetrieb auf dem Kanal des Produktivbetriebs mehr Bandbreite zur Verfügung, die für die Übertragung von Nutzdaten verwendet werden kann. Ebenso steht entsprechend auch für den Datenaustausch in dem Kommunikationsnetz zweiter Art KN2 entsprechend mehr Bandbreite zur Verfügung. Da die Konfiguration somit nicht im Wettbewerb zur Übertragung von Nutzdaten stattfindet, besteht darüber hinaus vorteilhafterweise die Möglichkeit, geänderte, beispielsweise Sensoren oder Aktoren der Automatisierungstechnik betreffende Einstellungen auf den Netzknoten erst zu überprüfen beziehungsweise zu testen, bevor die Netzknoten wieder in den Produktivbetrieb genommen werden, d.h. beispielsweise wieder in das Kommunikationsnetz erster Art KN1 aufgenommen werden. Eventuelle Fehleinstellungen können somit vorteilhafterweise bereits vor der Wiederaufnahme in das Kommunikationsnetz erster Art KN1 erkannt und korrigiert werden.

## Patentansprüche

1. Verfahren zum Betreiben eines Kommunikationssystems mit einem Kommunikationsnetz erster Art (KN1) und einem Kommunikationsnetz zweiter Art (KN2) mit den folgenden Schritten:
- Entfernen (2) des Netzknotens (D1) aus dem Kommunikationsnetz erster Art (KN1) durch einen Koordinationsknoten (K),
- Aufnehmen (3) des Netzknotens (D1) in das Kommunikationsnetz zweiter Art (KN2) durch den Verwaltungsknoten (VK) und
- Durchführen (4) eines Datenaustausches zwischen dem Verwaltungsknoten (VK) und dem Netzknoten (D1) in dem Kommunikationsnetz zweiter Art (KN2)
**gekennzeichnet durch**
- vor dem Entfernen des Netzknotens (D1) Senden (1) einer einen Netzknoten (z.B. D1) des Kommunikationsnetzes erster Art (KN1) identifizierenden Aufforderungs-Nachricht an den Koordinationsknoten (K) des Kommunikationsnetzes erster Art (KN1) **durch** den Verwaltungsknoten (VK) des Kommunikationsnetzes zweiter Art (KN2).

2. Verfahren nach Anspruch 1,
**dadurch gekennzeichnet, dass**
- als Kommunikationsnetz erster Art (KN1) ein Nutzdatennetz und als Kommunikationsnetz zweiter Art (KN2) ein Konfigurationsnetz verwendet wird und
- im Rahmen des Datenaustausches eine Konfiguration oder eine Änderung einer bestehenden Konfiguration des Netzknotens (D1) erfolgt.

3. Verfahren nach Anspruch 1 oder 2,
**dadurch gekennzeichnet, dass**
nach dem Entfernen (2) des Netzknotens (D1) aus dem Kommunikationsnetz erster Art (KN1) ein Aufnehmen des Netzknotens (D1) ausschließlich in das Kommunikationsnetz zweiter Art (KN2) zugelassen wird.

4. Verfahren nach einem der vorangehenden Ansprüche,
**dadurch gekennzeichnet, dass**
der Netzknoten (D1) nach erfolgtem Datenaustausch von dem Verwaltungsknoten (VK) aus dem Kommunikationsnetz zweiter Art (KN2) entfernt wird.

5. Verfahren nach einem der Ansprüche 1 bis 3,
**dadurch gekennzeichnet, dass**
der Netzknoten (D1) nach erfolgtem Datenaustausch in dem Kommunikationsnetz zweiter Art (KN2) verbleibt.

6. Verfahren nach einem der vorangehenden Ansprüche,
**dadurch gekennzeichnet, dass**
der Verwaltungsknoten (VK) dem Koordinationsknoten (K) nach erfolgtem Datenaustausch mit dem Netzknoten (D1) durch das Senden einer Freigabe-Nachricht eine Wiederaufnahme des Netzknotens (D1) in das Kommunikationsnetz erster Art (KN1) gestattet.

7. Verfahren nach einem der Ansprüche 1-4,
**dadurch gekennzeichnet, dass**
der Netzknoten (D1) von dem Koordinationsknoten (K) nach erfolgtem Datenaustausch wieder in das Kommunikationsnetz erster Art (KN1) aufgenommen wird.

8. Verfahren nach einem der vorangehenden Ansprüche,
**dadurch gekennzeichnet, dass**
dem Netzknoten (D1) von dem Koordinationsknoten (K) eine Identität des Kommunikationsnetzes zweiter Art (KN2) mitgeteilt wird, bei dem er sich nach seiner Entfernung aus dem Kommunikationsnetz erster Art (KN1) anmelden soll.

9. Verfahren nach Anspruch 8,
**dadurch gekennzeichnet, dass**
der Verwaltungsknoten (VK) die dem Netzknoten (D1) mitzuteilende Identität des Kommunikationsnetzes zweiter Art (KN2) an den Koordinationsknoten (K) übermittelt.

10. Verfahren nach einem der vorangehenden Ansprüche,
**dadurch gekennzeichnet, dass**
der Verwaltungsknoten (VK) an den Netzknoten (D1) eine Identität desjenigen Kommunikationsnetzes (z.B. KN1) übermittelt, bei dem sich der Netzknoten (D1) nach erfolgtem Datenaustausch anmelden soll.

11. Verfahren nach einem der vorangehenden Ansprüche,
**dadurch gekennzeichnet, dass**
drahtlos an das jeweilige Kommunikationsnetz (KN1, KN2) angeschlossene Netzknoten (D1) verwendet werden.

12. Verfahren nach einem der vorangehenden Ansprüche,
**dadurch gekennzeichne**t, dass
als Kommunikationsnetz erster Art (KN1) und/oder als Kommunikationsnetz zweiter Art (KN2) ein Kommunikationsnetz gemäß dem Standard IEEE 802.15.4 verwendet wird.

13. Verfahren nach einem der vorangehenden Ansprüche,
**dadurch gekennzeichnet, dass**
die Datenübertragung zwischen dem Netzknoten (D1) und dem Koordinationsknoten (K) sowie dem Netzknoten (D1) und dem Verwaltungsknoten (VK) unter Verwendung unterschiedlicher Kommunikationsprotokolle erfolgt.

14. Verfahren nach einem der vorangehenden Ansprüche,
**dadurch gekennzeichnet, dass**
das Kommunikationsnetz erster Art (KN1) und das Kommunikationsnetz zweiter Art (KN2) unterschiedliche Übertragungskanäle nutzen.

15. Verfahren nach einem der vorangehenden Ansprüche,
**dadurch gekennzeichnet, dass**
ein Kommunikationssystem der Automatisierungstechnik mit Netzknoten (D1, D2, D3) mit Sensoren und/oder Aktoren verwendet wird.

16. Koordinationsknoten (K) mit Mitteln zur Ausführung allen Schritte des Verfahrens nach einem der Ansprüche 1 bis 15.

17. Verwaltungsknoten (VK) mit Mitteln Ausführung allen Schritte des Verfahrens nach einem der Ansprüche 1 bis 15
**dadurch gekennzeichnet, dass**
der Verwaltungsknoten (VK) zusätzlich als Koordinationsknoten (K) nach Anspruch 16 ausgebildet ist.

18. Kommunikationssystem mit einem Netzknoten (D1) mit Mitteln zur Ausführung allen Schritte des Verfahrens nach einem der Ansprüche 1 bis 15, einem Koordinationsknoten (K) nach Anspruch 16 sowie einem Verwaltungsknoten (VK) nach Anspruch 17.

## Claims

1. Method for operating a communication system having a communication network of the first type (KN1) and a communication network of the second type (KN2) with the hollowing steps:
- (2) the network node (D1) is removed from the communication network of the first type (KN1) by a coordination node (K),
- (3) the network node (D1) is included in the communication network of the second type (KN2) by the management node (VK) and
- (4) a data exchange is performed between the management node (VK) and the network node (D1) in the communication network of the second type (KN2)
**characterised by**
- before the network node (D1) is removed a request message identifying a network node (e.g. D1) in the communication network of the first type (KN1) being sent (1) to the coordination node (K) in the communication network of the first type (KN1) by the management node (VK) in the communication network of the second type (KN2),

2. Method according to claim 1,
**characterised in that**
- a user data network is used as a communication network of the first type (KN1) and a configuration network is used as a communication network of the second type (KN2) and
- in the context of the data exchange a configuration or a change to an existing configuration of the network node (D1) takes place.

3. Method according to claim 1 or 2,
**characterised in that**
after the network node (D1) has been removed (2) from the communication network of the first type (KN1) the inclusion of the network node (D1) exclusively in the communication network of the second type (KN2) is permitted.

4. Method according to one of the preceding claims,
**characterised in that**
after a data exchange has taken place the network node (D1) is removed by the management node (VK) from the communication network of the second type (KN2).

5. Method according to one of claims 1 to 3,
**characterised in that**
the network node (D1) remains in the communication network of the second type (KN2) after a data exchange has taken place.

6. Method according to one of the preceding claims,
**characterised in that**
after a data exchange has taken place with the network node (D1), by sending a release message the management node (VK) allows the coordination node (K) to again include the network node (D1) in the communication network of the first type (KN1).

7. Method according to one of claims 1 - 4,
**characterised in that**
the network node (D1) is included again by the coordination node (K) in the communication network of the first type (KN1) after a data exchange has taken place.

8. Method according to one of the preceding claims,
**characterised in that**
an identity of the communication network of the second type (KN2), with which the network node (D1) is to register after its removal from the communication network of the first type (KN1), is notified to the network node (D1) by the coordination node (K).

9. Method according to claim 8,
**characterised in that**
the management node (VK) conveys to the coordination node (K) the identity of the communication network of the second type (KN2) to be notified to the network node (D1).

10. Method according to one of the preceding claims,
**characterised in that**
the management node (VK) conveys to the network node (D1) an identity of the particular communication network (e.g. KN1), with which the network node (D1) is to register after a data exchange has taken place.

11. Method according to one of the preceding claims,
**characterised in that**
network nodes (D1) connected wirelessly to the respective communication network (KN1, KN2) are used.

12. Method according to one of the preceding claims,
**characterised in that**
a communication network in accordance with the IEEE 802.15.4 standard is used as the communication network of the first type (KN1) and/or as the communication network of the second type (KN2) .

13. Method according to one of the preceding claims,
**characterised in that**
the data transmission between the network node (D1) and the coordination node (K) and also between the network node (D1) and the management node (VK) takes place using different communication protocols.

14. Method according to one of the preceding claims,
**characterised in that**
the communication network of the first type (KN1) and the communication network of the second type (KN2) utilise different transmission channels.

15. Method according to one of the preceding claims,
**characterised in that**
a communication system from the automation technology sector having network nodes (D1, D2, D3) with sensors and/or actuators is used.

16. Coordination node (K) having means for executing all the steps of the method according to one of claims 1 to 15.

17. Management node (VK) having means for executing all the steps of the method according to one of claims 1 to 15,
**characterised in that**
the management node (VK) is additionally designed as a coordination node (K) according to claim 16.

18. Communication system with a network node (D1) having means for executing all the steps of the method according to one of claims 1 to 15, a coordination node (K) according to claim 16 and a management node (VK) according to claim 17.

## Revendications

1. Procédé pour faire fonctionner un système de communication avec un réseau de communication d'un premier type (KN1) et un réseau de communication d'un deuxième type (KN2), comportant les étapes suivantes :
- suppression (2) du noeud de réseau (D1) du réseau de communication d'un premier type (KN1) par un noeud de coordination (K) ;
- admission (3) du noeud de réseau (D1) dans le réseau de communication d'un deuxième type (KN2) par le noeud d'administration (VK) ; et
- exécution (4) d'un échange de données entre le noeud d'administration (VK) et le noeud de réseau (D1) dans le réseau de communication d'un deuxième type (KN2) ;
**caractérisé par** :
- avant la suppression du noeud de réseau (D1), l'envoi (1) d'un message d'invitation identifiant un noeud de réseau (par exemple D1) du réseau de communication d'un premier type (KN1) au noeud de coordination (K) du réseau de communication d'un premier type (KN1), par le noeud d'administration (VK) du réseau de communication d'un deuxième type (KN2).

2. Procédé selon la revendication 1, **caractérisé en ce que** :
- sont utilisés, en tant que réseau de communication d'un premier type (KN1), un réseau de données utiles et, en tant que réseau de communication d'un deuxième type (KN2), un réseau de configuration ; et
- une configuration ou une modification d'une configuration existante du noeud de réseau (D1) ont lieu dans le cadre de l'échange de données.

3. Procédé selon la revendication 1 ou 2, **caractérisé en ce qu'**est autorisée, après la suppression (2) du noeud de réseau (D1) du réseau de communication d'un premier type (KN1), une admission du noeud de réseau (D1) uniquement dans le réseau de communication d'un deuxième type (KN2) .

4. Procédé selon l'une des revendications précédentes, **caractérisé en ce que** le noeud de réseau (D1) est supprimé du réseau de communication d'un deuxième type (KN2) par le noeud d'administration (VK) après que l'échange de données a eu lieu.

5. Procédé selon l'une des revendications 1 à 3, **caractérisé en ce que** le noeud de réseau (D1) reste dans le noeud de réseau d'un deuxième type (KN2) après que l'échange de données a eu lieu.

6. Procédé selon l'une des revendications précédentes, **caractérisé en ce que** le noeud d'administration (VK), après que l'échange de données avec le noeud de réseau (D1) a eu lieu, autorise au noeud de coordination (K), par l'émission d'un message d'autorisation, une réadmission du noeud de réseau (D1) dans le réseau de communication d'un premier type (KN1).

7. Procédé selon l'une des revendications 1 à 4, **caractérisé en ce que** le noeud de réseau (D1) est réadmis dans le réseau de communication d'un premier type (KN1) par le noeud de coordination (K) après que l'échange de données a eu lieu.

8. Procédé selon l'une des revendications précédentes, **caractérisé en ce qu'**est communiquée au noeud de réseau (D1), par le noeud de coordination (K), une identité du réseau de communication d'un deuxième type (KN2) auquel il doit se connecter après sa suppression du réseau de communication d'un premier type (KN1).

9. Procédé selon la revendication 8, **caractérisé en ce que** le noeud d'administration (VK) transmet au noeud de coordination (K) l'identité du réseau de communication d'un deuxième type (KN2) à communiquer au noeud de réseau (D1).

10. Procédé selon l'une des revendications précédentes, **caractérisé en ce que** le noeud d'administration (VK) transmet au noeud de réseau (D1) une identité du réseau de communication (KN1, par exemple) auquel le noeud de réseau (D1) doit se connecter après que l'échange de données a eu lieu.

11. Procédé selon l'une des revendications précédentes, **caractérisé en ce que** sont utilisés des noeuds de réseau (D1) connectés sans fil au réseau de communication respectif (KN1, KN2).

12. Procédé selon l'une des revendications précédentes, **caractérisé en ce qu'**est utilisé, en tant que réseau de communication d'un premier type (KN1) et/ou en tant que réseau de communication d'un deuxième type (KN2), un réseau de communication selon la norme IEEE 802.15.4.

13. Procédé selon l'une des revendications précédentes, **caractérisé en ce que** la transmission de données entre le noeud de réseau (D1) et le noeud de coordination (K) ainsi qu'entre le noeud de réseau (D1) et le noeud d'administration (VK) se fait avec utilisation de protocoles de communication différents.

14. Procédé selon l'une des revendications précédentes, **caractérisé en ce que** le réseau de communication d'un premier type (KN1) et le réseau de communication d'un deuxième type (KN2) utilisent différents canaux de transmission.

15. Procédé selon l'une des revendications précédentes, **caractérisé en ce qu'**est utilisé un système de communication de la technique de l'automatisation avec des noeuds de réseau (D1, D2, D3) avec des capteurs et/ou des actionneurs.

16. Noeud de coordination (K) avec des moyens pour exécuter toutes les étapes du procédé selon l'une des revendications 1 à 15.

17. Noeud d'administration (VK) avec des moyens pour exécuter toutes les étapes du procédé selon l'une des revendications 1 à 15, **caractérisé en ce que** le noeud d'administration (VK) est additionnellement réalisé en tant que noeud de coordination (K) selon la revendication 16.

18. Système de communication avec un noeud de réseau (D1) avec des moyens pour exécuter toutes les étapes du procédé selon l'une des revendications 1 à 15, un noeud de coordination (K) selon la revendication 16 et un noeud d'administration (VK) selon la revendication 17.
